# FASCICULE DE BREVET EUROPEEN

(11) **EP 3 874 948 B1**
(45) Date de publication et mention de la délivrance du brevet: **22.11.2023**
(21) Numéro de dépôt: 21160372.5
(22) Date de dépôt: 03.03.2021
(51) Int. Cl.: A01N 31/04, A01N 31/14, A01N 35/04, A01N 37/02, A01N 49/00, A01P 19/00

(54) **COMPOSITION ATTRACTIVE POUR LES MÂLES ET LES FEMELLES BRUCHES DE LA FÉVEROLE**
LOCKSTOFFZUSAMMENSETZUNG FÜR MÄNNLICHE UND WEIBLICHE SAMENKÄFER DER ACKERBOHNE
ATTRACTIVE COMPOSITION FOR MALE AND FEMALE FIELD BEAN WEEVILS

(30) Priorité: 03.03.2020 FR 2002150
(43) Date de publication de la demande: 08.09.2021
(73) Titulaire: Institut national de recherche pour l'agriculture, l'alimentation et l'environnement, 75007 Paris (FR); Arvalis Institut du végétal, 75116 Paris (FR); Terres Inovia, 75008 Paris (FR); Centre national de la recherche scientifique, 75016 Paris (FR); AgriOdor, 91400 Orsay (FR)
(72) Inventeur: FRÉROT, BRIGITTE, 78330 Fontenay le Fleury (FR); LEPPIK, Ene, 75005 Paris (FR); PINIER, Centina, 78000 Versailles (FR)
(74) Mandataire: Lavoix

(56) Documents cités:
- FR-A1- 3 035 775
- TOBY JA BRUCE ET AL: "Development of semiochemical attractants for monitoring bean seed beetle, Bruchus rufimanus", PEST MANAGEMENT SCIENCE, vol. 67, no. 10, 2 mai 2011 (2011-05-02), pages 1303-1308, XP055008763, ISSN: 1526-498X, DOI: 10.1002/ps.2186

## Description

La présente invention concerne une composition attractive pour des insectes ravageurs de la féverole du genre *Bruchus,* en particulier *Bruchus rufimanus.*

*Bruchus rufimanus* est un coléoptère spécifique de la féverole, appelé communément bruche de la fève, très préjudiciable pour la qualité des graines destinées à l'alimentation humaine ou à la production de semences. En effet, les larves de cet insecte se développent à l'intérieur des graines de fèves et féveroles, les rendant alors inaptes à la consommation.

Plus exactement, les bruches pondent sur les gousses des fèves et féveroles dès leur apparition, à condition que le climat soit favorable. La larve perfore ensuite l'enveloppe de l'œuf par sa face collée à la gousse et pénètre directement dans celle-ci. La croissance larvaire dure trois mois et pour sortir de la graine, la larve découpe un opercule mais il faut attendre la nymphose qui dure une dizaine de jours pour que l'adulte sorte de la graine. Il est donc difficile de détruire les larves de cet insecte car celles-ci sont inaccessibles aux traitements chimiques.

Par ailleurs, les adultes, après l'hivernation, colonisent les cultures en fleur, car, alors que l'appareil reproducteur mâle est fonctionnel au moment de la colonisation, les femelles sont encore en diapause reproductive lors de leur arrivée et seule la consommation de pollen de féverole permet leur maturation sexuelle et stimule leur comportement reproductif.

De plus, pendant la culture, l'utilisation des insecticides est restreinte. En particulier, la législation actuelle prévoit que les insecticides autorisés pendant la floraison doivent être appliqués « en dehors de la présence d'abeilles » et les préconisations sont en général d'intervenir « tôt le matin ou tard le soir ». Par ailleurs, depuis avril 2013, l'utilisation du produit le plus efficace contre les bruches, à base de lambda-cyhalothrine, a été restreinte à un seul passage en floraison.

A ce jour, il existe deux types de produits utilisables lors du stockage des grains : un insecticide de contact à base de deltaméthrine (K-Obiol^{®} ULV 6) et des fumigants à base de phosphure d'aluminium ou de magnésium. La fumigation présente l'avantage de détruire les larves à l'intérieur du grain et de ne laisser aucun résidu sur les grains et dans l'environnement. Par contre, elle nécessite des silos étanches et un opérateur agréé. De ce fait, elle est rarement mise en oeuvre. Le K-Obiol^{®} ULV 6 est plus facile à utiliser mais il ne tue les insectes que quelques jours après leur sortie du grain. Il peut donc y avoir quelques insectes vivants au moment de la vente.

Bruce et al. (2011, Pest Manag Sci, 67: 1303-1308) décrivent le développement d'attractifs sémiochimiques pour le contrôle de *Bruchus rufimanus.* Les pièges décrits dans cet article sont à base de (R)-linalool, alcool cinnamylique et cinnamaldéhyde.

La demande FR3035775 décrit une composition comprenant de l'acétate de (3Z)-hex-3-èn-1-yle, de l'ocimène, du linalool, du caryophyllène et du limonène, capable d'attirer les bruches de la féverole. Néanmoins, cette composition ne permet d'attirer que les femelles fécondées et n'est donc pas totalement efficace pour lutter contre les bruches.

Il n'existe donc pas à ce jour de produit satisfaisant permettant de lutter efficacement contre les bruches. En particulier, à ce jour, les producteurs de légumineuses telles que les féveroles n'ont plus de solution efficace pour lutter contre ces insectes suite à l'interdiction de plusieurs substances insecticides.

La présente invention a donc pour but de fournir un produit non polluant et peu toxique pour la faune, pour lutter contre les insectes ravageurs de la féverole du genre *Bruchus,* et en particulier contre *Bruchus rufimanus,* à base de composés volatils non rémanents dans l'environnement.

La présente invention a également pour but de fournir un produit permettant de lutter contre les insectes ravageurs de la féverole avant leur reproduction.

La présente invention résulte de la découverte inattendue par les inventeurs qu'une composition comprenant du linalool, de l'estragol, du caryophyllène, du limonène, du cis-3-hexenyl acétate, de l'ocimène, du benzaldéhyde et du benzylalcool imitait l'odeur de la féverole au stade fleur et attirait ainsi efficacement à la fois les femelles et les mâles de bruche de la féverole.

La présente invention a ainsi pour objet une composition attractive pour un insecte ravageur de la féverole du genre *Bruchus,* en particulier *Bruchus rufimanus,* comprenant ou consistant en :
(a) 15,0% à 25,0% en poids de linalool,
(b) 1,0% à 10,0% en poids d'estragol,
(c) 15,0% à 25,0% en poids de caryophyllène,
(d) 5,0% à 20,0% en poids de limonène,
(e) 20,0% à 30,0% en poids de cis-3-hexenyl acétate,
(f) 5,0% à 20,0% en poids d'ocimène,
(g) 1,0% à 10,0% en poids de benzaldéhyde, et
(h) 1,0% à 10,0% en poids de benzylalcool,
par rapport au poids total du mélange constitué par (a), (b), (c), (d), (e), (f), (g) et (h).

La présente invention a également pour objet l'utilisation de la composition selon l'invention, pour attirer et/ou piéger un insecte ravageur de la féverole du genre Bruchus, en particulier *Bruchus rufimanus,* plus particulièrement un mâle et/ou une femelle.

La présente invention a également pour objet un kit pour le piégeage d'un insecte ravageur de la féverole du genre Bruchus, en particulier *Bruchus rufimanus* comprenant :
i. la composition selon l'invention, et
ii. au moins un piège pour insecte ravageur de la féverole du genre Bruchus, en particulier *Bruchus rufimanus,* ledit piège étant de préférence un piège vertical comprenant une feuille de matière plastique à base d'acétate de cellulose (par exemple du Rhodoid^{®}) transparente et engluée.

La présente invention concerne également l'utilisation d'un kit selon l'invention, pour le piégeage d'un insecte ravageur de la féverole du genre Bruchus, en particulier *Bruchus rufimanus.*

La présente invention a également pour objet une méthode de piégeage d'insectes ravageurs de la féverole du genre Bruchus, en particulier *Bruchus rufimanus,* comprenant les étapes successives suivantes :
I) optionnellement, l'attraction et/ou le piégeage d'insectes ravageurs de la féverole du genre Bruchus, en particulier *Bruchus rufimanus* en utilisant au moins un piège pour insecte ravageur comprenant la composition selon l'invention,
II) l'attraction et/ou le piégeage d'insectes ravageurs de la féverole du genre Bruchus, en particulier *Bruchus rufimanus* en utilisant au moins un piège pour insecte ravageur comprenant pour moitié la composition selon l'invention, et pour l'autre moitié une composition comprenant de l'acétate de (3Z)-hex-3-èn-1-yle, et
III) l'attraction et/ou le piégeage d'insectes ravageurs de la féverole du genre Bruchus, en particulier *Bruchus rufimanus* en utilisant au moins un piège pour insecte ravageur comprenant une composition comprenant de l'acétate de (3Z)-hex-3-èn-1-yle.

La présente invention a également pour objet une méthode de piégeage d'insectes ravageurs de la féverole du genre Bruchus, en particulier *Bruchus rufimanus,* comprenant les étapes successives suivantes :
(i) l'attraction et/ou le piégeage d'insectes ravageurs de la féverole du genre Bruchus, en particulier *Bruchus rufimanus,* en utilisant au moins un piège pour insecte ravageur comprenant la composition selon l'invention et, optionnellement, au moins un piège pour insecte ravageur comprenant une composition comprenant de l'acétate de (3Z)-hex-3-èn-1-yle, et
(ii) l'attraction et/ou le piégeage d'insectes ravageurs de la féverole du genre Bruchus, en particulier *Bruchus rufimanus* en utilisant au moins un piège pour insecte ravageur comprenant une composition comprenant de l'acétate de (3Z)-hex-3-èn-1-yle.

### Description détaillée de l'invention

### Composition

La composition selon l'invention comprend, consiste essentiellement en, ou consiste en :
(a) 15,0% à 25,0% en poids de linalool,
(b) 1,0% à 10,0% en poids d'estragol,
(c) 15,0% à 25,0% en poids de caryophyllène,
(d) 5,0% à 20,0% en poids de limonène,
(e) 20,0% à 30,0% en poids de cis-3-hexenyl acétate,
(f) 5,0% à 20,0% en poids d'ocimène,
(g) 1,0% à 10,0% en poids de benzaldéhyde, et
(h) 1,0% à 10,0% en poids de benzylalcool,
par rapport au poids total du mélange constitué par (a), (b), (c), (d), (e), (f), (g) et (h).

Le linalool ou linalol est un alcool tertiaire insaturé terpénique. Ce composé est également nommé 3,7-diméthyl-1 ,6-octadién-3-ol et répond à la formule suivante :

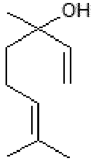

Le linalool est compris dans la composition selon l'invention à une concentration comprise entre 15,0% et 25,0% en poids, de préférence entre 15,5% et 24,0% en poids, entre 16,0% et 23,0% en poids, entre 16,5% et 22,0% en poids, plus préférentiellement entre 17,0% et 21,0% en poids par rapport au poids total du mélange constitué par (a), (b), (c), (d), (e), (f), (g) et (h).

Selon l'invention, le terme « estragol », aussi appelé *p*-allylanisole ou méthylchavicol, est un composé organique aromatique de la famille des phénylpropènes. C'est un isomère de l'anéthol. Il répond à la formule suivante :

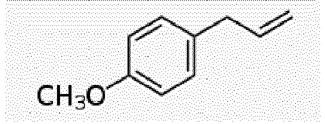

L'estragol est compris dans la composition selon l'invention à une concentration comprise entre 1,0% et 10,0% en poids, de préférence entre 1,5% et 9,0% en poids, entre 2,0% et 8,0% en poids, entre 2,0% et 7,0%, plus préférentiellement entre 2,0% et 6,0% en poids par rapport au poids total du mélange constitué par (a), (b), (c), (d), (e), (f), (g) et (h).

Selon l'invention, le terme "caryophyllène" désigne à la fois les isomères alpha et bêta de ce composé.

De préférence, le caryophyllène selon l'invention est le β-caryophyllène ou (1*R*,4*E*,9*S*)-4,11,11-triméthyl-8-méthylidènebicyclo[7.2.0]undéc-4-ène. Cet isomère est un sesquiterpène naturel bicyclique composé d'un macrocycle à 9 atomes de carbone fusionné avec un noyau cyclobutane, de formule suivante :

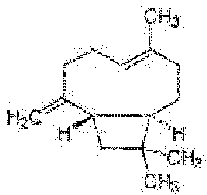

Selon l'invention, le caryophyllène peut être sous sa forme alpha (α-caryophyllène ou humulène), ou sous forme d'un mélange de ces différents isomères.

L'humulène, également appelé α-humulène ou α-caryophyllène, ou (1*E*,4*E*,8*E*)-2,6,6,9-tétraméthylcycloundéca-1,4,8-triène, est un sesquiterpène macrocyclique à 11 atomes de carbone de formule brute C₁₅H₂₄ constitué de trois unités isoprènes avec trois doubles liaisons non conjuguées, de formule suivante :

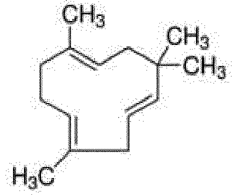

Le caryophyllène est compris dans la composition selon l'invention à une concentration comprise entre 15,0% et 25,0% en poids, de préférence entre 15,5% et 24,0% en poids, entre 16,0% et 23,0% en poids, entre 16,5% et 22,0% en poids, plus préférentiellement entre 17,0% et 21,0% en poids par rapport au poids total du mélange constitué par (a), (b), (c), (d), (e), (f), (g) et (h).

Le limonène C₁₀H₁₆ ou 1-méthyl-4-prop-1-èn-2-yl-cyclohexène est un hydrocarbure terpénique. Le limonène est une molécule chirale. Parmi ses énantiomères, on peut citer le D-limonène ((R)-(+)-limonène), qui est l'énantiomère R dextrogyre, ainsi que le L (-)-limonène, qui est l'énantiomère S lévogyre. Le limonène racémique est connu en tant que dipentène.

Les énantiomères du limonène répondent aux formules suivantes :

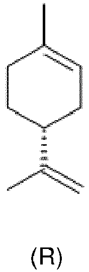

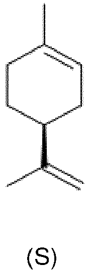

Selon l'invention, le terme "limonène" désigne à la fois chacun des énantiomères susmentionnés ou le mélange racémique de ces deux composés. Le limonène selon l'invention peut donc être soit l'énantiomère (R), soit l'énantiomère (S) ou encore le mélange racémique. De préférence, le limonène utilisé selon l'invention est l'énantiomère (R).

Le limonène est compris dans la composition selon l'invention à une concentration comprise entre 5,0% et 20,0% en poids, de préférence entre 6,0% et 19,0% en poids, entre 7,0% et 18,0% en poids, entre 8,0% et 17,0% en poids, entre 9,0% et 16,0% en poids, entre 9,5% et 15,0% en poids, plus préférentiellement entre 10,0% et 14,0% en poids, par rapport au poids total du mélange constitué par (a), (b), (c), (d), (e), (f), (g) et (h).

Selon l'invention, le terme « cis-3-hexenyl acétate » aussi appelé « acétate de cis-hex-3-ènyle », « (Z)-3-hexenyl acétate », « (Z)-hex-3-enyl acétate » ou « 3-hexenylacétate » est un ester de l'acide acétique de formule suivante :

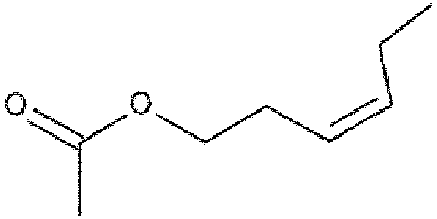

Le cis-3-hexenyl acétate est compris dans la composition selon l'invention à une concentration comprise entre 20,0% à 30,0% en poids, de préférence entre 21,0% et 29,5% en poids, de préférence entre 22,0% et 29,0%, entre 23,0% et 28,5% en poids, plus préférentiellement entre 24,0% et 28,0% en poids par rapport au poids total du mélange constitué par (a), (b), (c), (d), (e), (f), (g) et (h).

L'ocimène est un composé organique de la famille des monoterpènes, de formule brute C₁₀H₁₆. Il possède quatre isomères, à savoir :
- l' α-ocimène (ou 3,7-diméthyl-1,3,7-octatriène) de formule suivante : 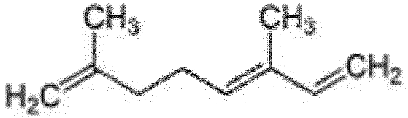
- le (Z)-β-ocimène ou ((Z)-3,7-diméthyl-1,3,6-octatriène) de formule suivante : 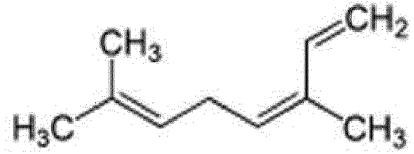
- le (E)-β-ocimène (ou (E)-3,7-diméthyl-1,3,6-octatriène) de formule suivante : 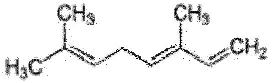 et
- l'alloocimène (ou 2,6-diméthyl-2,4,6-octatriène) de formule suivante :

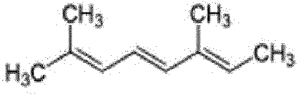

Selon l'invention, le terme "ocimène" désigne à la fois chacun des isomères susmentionnés ou un mélange de plusieurs de ces 4 composés.

L'ocimène est compris dans la composition selon l'invention à une concentration comprise entre 5,0% et 20,0% en poids, de préférence entre 6,0% et 19,0% en poids, entre 7,0% et 18,0% en poids, entre 8,0% et 17,0% en poids, entre 9,0% et 16,0% en poids, entre 9,5% et 15,0% en poids, plus préférentiellement entre 10,0% et 14,0% en poids, par rapport au poids total du mélange constitué par (a), (b), (c), (d), (e), (f), (g) et (h).

Selon l'invention, le terme « benzaldéhyde » désigne l'aldéhyde aromatique de formule suivante :

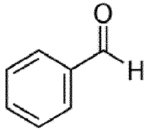

Le benzaldéhyde est compris dans la composition selon l'invention à une concentration comprise entre 1,0% et 10,0% en poids, de préférence entre 1,5% et 9,0% en poids, entre 2,0% et 8,0%, plus préférentiellement entre 3,0% et 7,0% en poids par rapport au poids total du mélange constitué par (a), (b), (c), (d), (e), (f), (g) et (h).

Selon l'invention, le terme « benzylalcool » ou « alcool benzylique » désigne l'alcool de formule suivante :

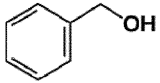

Le benzylalcool est compris dans la composition selon l'invention à une concentration comprise entre 1,0% et 10,0% en poids, de préférence entre 1,5% et 9,0% en poids, entre 2,0% et 8,0%, plus préférentiellement entre 3,0% et 7,0% en poids par rapport au poids total du mélange constitué par (a), (b), (c), (d), (e), (f), (g) et (h).

Dans un mode de réalisation particulièrement préféré, la composition selon l'invention comprend, consiste essentiellement en, ou consiste en :
(a) 17,0% à 21,0% en poids de linalool,
(b) 2,0% à 6,0% en poids d'estragol,
(c) 17,0% à 21,0% en poids de caryophyllène,
(d) 10,0% à 14,0% en poids de limonène,
(e) 24,0% à 28,0% en poids de cis-3-hexenyl acétate,
(f) 10,0% à 14,0% en poids d'ocimène,
(g) 3,0% à 7,0% en poids de benzaldéhyde, et
(h) 3,0% à 7,0% en poids de benzylalcool,
par rapport au poids total du mélange constitué par (a), (b), (c), (d), (e), (f), (g) et (h).

Ces composés actifs, utilisés comme attractif selon l'invention, sont des composés non rémanents dans l'environnement.

De plus, ils sont peu toxiques pour la faune aux doses utilisées et non toxiques sur les pollinisateurs (aucun Hymenoptère pollinisateur dans les pièges). De plus, ces composés sont peu coûteux.

De préférence, la composition selon l'invention ne comprenant pas d'autres agents actifs que les composés (a) à (h).

Selon un mode de réalisation, la composition attractive selon l'invention peut être constituée uniquement du mélange constitué par (a), (b), (c), (d), (e), (f), (g) et (h) et ainsi être nommée "composition concentrée". Une telle composition comprend donc uniquement les 8 composés actifs susmentionnés, à savoir : le linalool, l'estragol, le caryophyllène, le limonène, le cis-3-hexenyl acétate, l'ocimène, le benzaldéhyde et le benzylalcool.

Les gammes susmentionnées sont calculées par rapport à la somme des composés actifs (a), (b), (c), (d), (e), (f), (g) et (h) et ne tiennent pas comptes des dilutions éventuelles, notamment comme décrit plus loin.

La somme des pourcentages en poids des actifs (a), (b), (c), (d), (e), (f), (g) et (h) est bien entendu égale à 100.

Selon un mode de réalisation, la composition attractive selon l'invention comprend en outre une matrice grasse, telle que de l'huile de paraffine, une huile de silicone ou une cire naturelle ou synthétique.

Une telle composition peut ainsi être nommée "composition diluée" et correspond par exemple à la "composition concentrée" susmentionnée à laquelle on ajoute la matrice grasse, en particulier de l'huile de paraffine, pour diluer les composés actifs (a), (b), (c), (d), (e), (f), (g) et (h). Cette étape de dilution permet ainsi de réduire les concentrations des différents actifs et ce dans des gammes adaptées à une utilisation dans les champs.

Selon un mode de réalisation, la concentration des actifs (a), (b), (c), (d), (e), (f), (g) et (h) susmentionnés varie de 1 µg/µl à 500 µg/µl de matrice grasse, en particulier d'huile de paraffine, en particulier de 100 µg/µl à 500 µg/µl de matrice grasse, en particulier d'huile de paraffine, et est de préférence égale à 500 µg/µl de matrice grasse, en particulier d'huile de paraffine.

### Kit

La présente invention concerne également un kit pour le piégeage d'un insecte ravageur de la féverole du genre Bruchus, en particulier *Bruchus rufimanus* comprenant :
i. la composition telle que définie dans la section « *Composition* » ci-dessus, et
ii. au moins un piège pour insecte, ledit piège étant de préférence un piège vertical comprenant une feuille de matière plastique à base d'acétate de cellulose (par exemple du Rhodoid^{®}) transparente et engluée.

Le piège vertical utilisé selon l'invention comprend en particulier des supports verticaux, notamment plantés dans le sol, sur lesquels est fixée une feuille de matière plastique à base d'acétate de cellulose (par exemple Rhodoid^{®}) transparente et engluée.

A titre de supports verticaux, on peut par exemple utiliser des piquets en bois.

Le piège selon l'invention peut en outre comprendre des moyens de fixation pour un support destiné à la composition attractive. Par exemple, le piège peut comprendre de la ficelle en nylon pour y attacher le support mentionné ci-dessus.

A titre de support destiné à la composition attractive on peut par exemple utiliser une cage en plastique dans laquelle il est possible de placer un flacon contenant ladite composition.

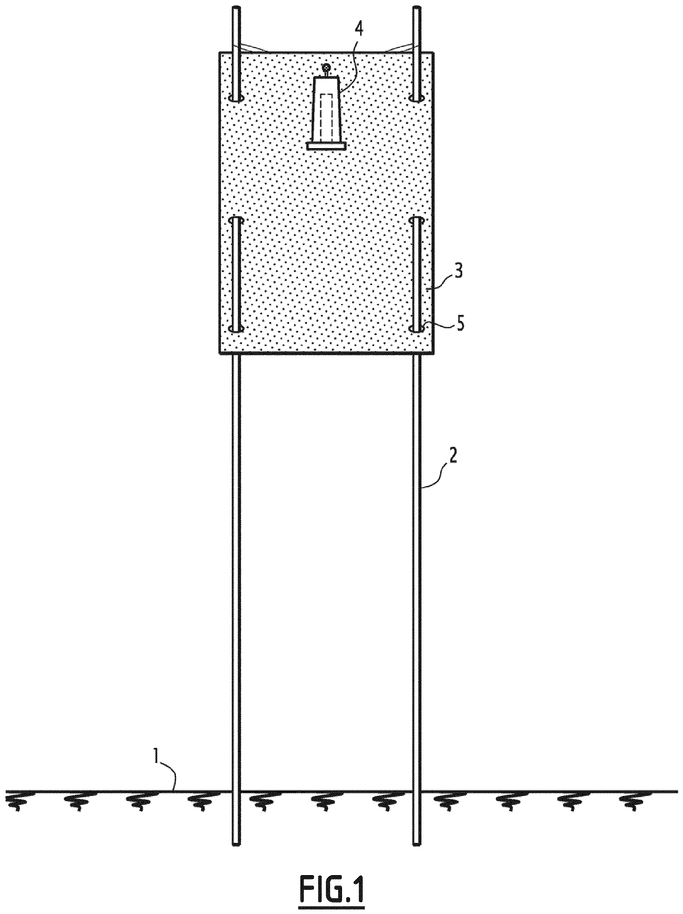

Un exemple de piège vertical est par exemple décrit dans la Figure 1. Ce piège vertical comprend des supports verticaux (2) et une feuille plastique (3), lesdits supports verticaux étant plantés dans le sol (1). Pour fixer la feuille plastique (3) sur lesdits supports verticaux (2), celle-ci comprend des trous (5) dans lesquels sont insérés lesdits supports verticaux (2). Le piège peut en outre comprendre des moyens de fixation pour attacher un support (4) pour y placer un récipient pouvant contenir la composition attractive selon l'invention.

L'invention peut également être mise en oeuvre avec d'autres modèles de pièges pour insectes, compatibles avec le comportement des insectes du genre *Bruchus,* tels que les pièges décrits dans les brevets KR101572603, CN107318799, EP0650322 et US9402383.

Dans un mode de réalisation particulier, le kit selon l'invention comprend en outre (iii) une deuxième composition comprenant de l'acétate de (3Z)-hex-3-èn-1-yle.

L'acétate de (3Z)-hex-3-èn-1-yle (ou acétate de cis-3-hexènyle) est un ester de l'acide acétique, de formule semi-développée CH₃COOCH₂CH₂CH=CHCH₂CH₃.

Ce composé peut être représenté par la formule suivante :

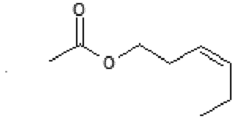

De préférence, l'acétate de (3Z)-hex-3-èn-1-yle est le composé majoritaire utilisé dans cette deuxième composition.

Selon un mode de réalisation, la deuxième composition comprend en outre de l'ocimène, comme défini dans la section « *Composition* » ci-dessus. Comme indiqué ci-dessus, la deuxième composition peut donc comprendre un seul isomère de l'ocimène ou un mélange de plusieurs des 4 isomères, à savoir un mélange de 2, 3 ou 4 des isomères de l'ocimène comme indiqué plus haut. Selon un mode de réalisation préféré, la deuxième composition comprend un mélange des 4 isomères de l'ocimène.

La deuxième composition peut donc comprendre de l'acétate de (3Z)-hex-3-èn-1-yle et un mélange des isomères de l'ocimène.

De préférence, le ratio entre la masse d'acétate de (3Z)-hex-3-èn-1-yle et la masse d'ocimène va de 1 à 4, de préférence de 1,5 à 3. Selon un mode de réalisation préférentiel, ce ratio est égal à 2.

Selon un mode de réalisation, la deuxième composition comprend en outre du linalool.

La deuxième composition peut donc comprendre de l'acétate de (3Z)-hex-3-èn-1-yle, un mélange des isomères de l'ocimène et du linalool.

De préférence, le ratio entre la masse d'acétate de (3Z)-hex-3-èn-1-yle et la masse de linalool va de 1 à 5, de préférence de 1,5 à 4. Selon un mode de réalisation préférentiel, ce ratio est égal à 2.

Selon un mode de réalisation, la deuxième composition comprend en outre du caryophyllène.

La deuxième composition peut donc comprendre de l'acétate de (3Z)-hex-3-èn-1-yle, un mélange des isomères de l'ocimène, du linalool et du caryophyllène.

De préférence, le ratio entre la masse d'acétate de (3Z)-hex-3-èn-1-yle et la masse de caryophyllène va de 1 à 5, de préférence de 1,5 à 4.

Selon un mode de réalisation, la deuxième composition comprend en outre du limonène. Comme indiqué ci-dessus, la deuxième composition peut donc comprendre un seul énantiomère du limonène ou le mélange racémique. Selon un mode de réalisation préféré, la deuxième composition comprend l'énantiomère (R) du limonène.

De préférence, le ratio entre la masse d'acétate de (3Z)-hex-3-èn-1-yle et la masse de limonène va de 1 à 5, de préférence de 1,5 à 4.

De préférence, la deuxième composition comprend un mélange constitué de l'acétate de (3Z)-hex-3-èn-1-yle, de l'ocimène, du linalool, du caryophyllène et du limonène.

De manière particulièrement préférée, la deuxième composition comprend un mélange constitué de l'acétate de (3Z)-hex-3-èn-1-yle, du mélange des 4 isomères de l'ocimène, du linalool, du caryophyllène et de l'énantiomère (R) du limonène.

Selon un mode de réalisation, cette deuxième composition peut être constituée uniquement du mélange susmentionné et ainsi être nommée "composition concentrée". Une telle composition comprend donc uniquement les cinq composés actifs susmentionnés, à savoir : l'acétate de (3Z)-hex-3-èn-1-yle, l'ocimène, le linalool, le caryophyllène et le limonène.

Selon un mode de réalisation, la deuxième composition comprend :
(A) au moins 30%, de préférence de 30% à 40% en poids d'acétate de (3Z)-hex-3-èn-1-yle,
(B) de 15% à 20% en poids d'ocimène,
(C) de 10% à 20% en poids de linalool,
(D) de 10% à 20% en poids de caryophyllène, et
(E) de 15% à 20% en poids de limonène,
par rapport au poids total du mélange constitué par (A), (B), (C), (D) et (E).

Les gammes susmentionnées sont calculées par rapport à la somme des composés actifs (A), (B), (C), (D) et (E) et ne tiennent pas comptes des dilutions éventuelles, notamment comme décrit plus loin.

La somme des pourcentages en poids des actifs (A), (B), (C), (D) et (E) est bien entendu égale à 100.

Selon un mode de réalisation, la deuxième composition comprend en outre de l'huile de paraffine.

Une telle composition peut ainsi être nommée "composition diluée" et correspond par exemple à la "composition concentrée" susmentionnée à laquelle on ajoute de l'huile de paraffine pour diluer les composés actifs (A), (B), (C), (D) et (E). Cette étape de dilution permet ainsi de réduire les concentrations des différents actifs et ce dans des gammes adaptées à une utilisation dans les champs.

Selon un mode de réalisation, la concentration des actifs (A), (B), (C), (D) et (E) susmentionnés varie de 100 µg/µl à 1000 µg/µl d'huile de paraffine, et est de préférence égale à 500 µg/µl d'huile de paraffine.

### Applications

La présente invention concerne également l'utilisation de la composition selon l'invention, définie dans la section « *Composition* » ci-dessus pour attirer et/ou piéger un insecte ravageur de la féverole du genre Bruchus, en particulier *Bruchus rufimanus,* en particulier mâle ou femelle.

La composition selon l'invention peut être utilisée en piégeage de masse sur les insectes mais également comme désorganisateur du processus de localisation de l'hôte.

Elle peut également être utilisée pour sélectionner des variétés de féveroles résistantes aux bruches (cf. Bottrell et al., Annu. Rev. Entomol. 1998, 43 : 347-367).

La présente invention concerne également l'utilisation du kit selon l'invention tel que défini dans la section « *Kit* » ci-dessus pour le piégeage d'un insecte ravageur de la féverole du genre *Bruchus,* en particulier *Bruchus rufimanus.*

L'invention consiste donc à attirer les insectes, notamment *Bruchus rufimanus,* en particulier mâles et/ou femelles, vers le piège sur lequel ceux-ci seront englués en raison de la présence de glu sur ledit piège.

Ainsi, la présente invention va permettre par exemple de limiter les populations de la bruche de la féverole.

La présente invention permet donc également de biocontrôler (c'est-à-dire exercer un biocontrôle) les populations d'insectes ravageurs de la féverole du genre *Bruchus,* en particulier *Bruchus rufimanus.*

La composition telle que définie ci-dessus ou le kit telle que défini ci-dessus peut être utilisé(e) à tout stade du développement de la féverole, par exemple avant le stade bouton, au stade bouton, au stade fleur, au stade fleur et gousse et/ou au stade gousse.

La composition telle que définie ci-dessus ou le kit telle que défini ci-dessus est particulièrement efficace à partir du début de la floraison jusqu'à la maturation des gousses.

Le début de la floraison correspond au stade bouton floral.

La présente invention a également pour objet une méthode de piégeage d'insectes ravageurs de la féverole du genre Bruchus, en particulier *Bruchus rufimanus,* comprenant des étapes successives, au cours desquelles sont utilisées :
- la composition selon l'invention telle que définie dans la section « *Composition* » ci-dessus, optionnellement en combinaison avec la composition comprenant de l'acétate de (3Z)-hex-3-èn-1-yle telle que définie dans la section « *Kit* » ci-dessus, puis
- uniquement la composition comprenant de l'acétate de (3Z)-hex-3-èn-1-yle,
ou bien :
- uniquement la composition selon l'invention, puis
- la composition selon l'invention en combinaison avec la composition comprenant de l'acétate de (3Z)-hex-3-èn-1-yle, puis
- la composition comprenant de l'acétate de (3Z)-hex-3-èn-1-yle.

Lorsque la composition selon l'invention et la composition comprenant de l'acétate de (3Z)-hex-3-èn-1-yle sont utilisées au cours d'une même étape, elles sont de préférence présentes sur des pièges différents, en particulier afin de ne pas perturber leur perception par les bruches.

La présente invention a ainsi particulièrement pour objet une méthode de piégeage d'insectes ravageurs de la féverole du genre Bruchus, en particulier *Bruchus rufimanus,* comprenant les étapes successives suivantes :
(i) l'attraction et/ou le piégeage d'insectes ravageurs de la féverole du genre Bruchus, en particulier *Bruchus rufimanus,* en utilisant au moins un piège pour insecte ravageur comprenant la composition selon l'invention telle que définie dans la section « *Composition* » ci-dessus et, optionnellement, au moins un piège pour insecte ravageur comprenant une composition comprenant de l'acétate de (3Z)-hex-3-èn-1-yle telle que définie dans la section « *Kit* » ci-dessus et
(ii) l'attraction et/ou le piégeage d'insectes ravageurs de la féverole du genre Bruchus, en particulier *Bruchus rufimanus* en utilisant au moins un piège pour insecte ravageur comprenant une composition comprenant de l'acétate de (3Z)-hex-3-èn-1-yle telle que définie dans la section « *Kit* » ci-dessus.

Lorsqu'au moins un piège comprenant la composition selon l'invention et au moins un piège comprenant la composition comprenant de l'acétate de (3Z)-hex-3-èn-1-yle sont utilisés dans l'étape (i), ces pièges sont de préférence utilisés en nombre égal et/ou sont de préférence alternés dans la parcelle.

L'étape (i) d'attraction et/ou piégeage ci-dessus est de préférence mise en oeuvre lorsque la féverole est au stade bouton floral jusqu'à la floraison.

L'étape (ii) d'attraction et/ou piégeage ci-dessus est de préférence mise en oeuvre lorsque la féverole est au stade gousse, en particulier à l'apparition du premier étage de jeunes gousses vertes. Le stade gousse commence généralement 3 semaines après le stade bouton floral.

Dans un mode de réalisation préféré, la méthode de piégeage telle que définie ci-dessus comprend les étapes successives suivantes :
pre-(i) optionnellement, l'attraction et/ou le piégeage d'insectes ravageurs de la féverole du genre Bruchus, en particulier *Bruchus rufimanus,* en utilisant au moins un piège pour insecte ravageur comprenant la composition selon l'invention,
(i) l'attraction et/ou le piégeage d'insectes ravageurs de la féverole du genre Bruchus, en particulier *Bruchus rufimanus,* en utilisant au moins un piège pour insecte ravageur comprenant la composition selon l'invention et au moins un piège pour insecte ravageur comprenant une composition comprenant de l'acétate de (3Z)-hex-3-èn-1-yle, et
(ii) l'attraction et/ou le piégeage d'insectes ravageurs de la féverole du genre Bruchus, en particulier *Bruchus rufimanus* en utilisant au moins un piège pour insecte ravageur comprenant une composition comprenant de l'acétate de (3Z)-hex-3-èn-1-yle.

La présente invention a également pour objet une méthode de piégeage d'insectes ravageurs de la féverole du genre Bruchus, en particulier *Bruchus rufimanus,* comprenant les étapes successives suivantes :
I) optionnellement, l'attraction et/ou le piégeage d'insectes ravageurs de la féverole du genre Bruchus, en particulier *Bruchus rufimanus* en utilisant un piège pour insecte ravageur comprenant la composition selon l'invention telle que définie dans la section « *Composition* » ci-dessus,
II) l'attraction et/ou le piégeage d'insectes ravageurs de la féverole du genre Bruchus, en particulier *Bruchus rufimanus* en utilisant un ensemble de pièges pour insecte ravageur dont la moitié comprend la composition selon l'invention telle que définie dans la section « *Composition* » ci-dessus, et l'autre moitié comprend une deuxième composition comprenant de l'acétate de (3Z)-hex-3-èn-1-yle telle que définie dans la section « *Kit* » ci-dessus, et
III) l'attraction et/ou le piégeage d'insectes ravageurs de la féverole du genre Bruchus, en particulier *Bruchus rufimanus* en utilisant un piège pour insecte ravageur comprenant une deuxième composition comprenant de l'acétate de (3Z)-hex-3-èn-1-yle telle que définie dans la section « *Kit* » ci-dessus.

En effet, la composition selon l'invention attirant les femelles et/ou les mâles, tandis que la deuxième composition attire préférentiellement les femelles fécondées, leur utilisation séquentielle dans une méthode de piégeage, permet d'obtenir une efficacité maximale sur le piégeage d'insectes ravageurs de la féverole du genre Bruchus, en particulier *Bruchus rufimanus.*

Dans les méthodes ci-dessus, plusieurs pièges sont de préférence utilisés à chaque étape, leur nombre dépendant par exemple de la taille de la parcelle de culture de féverole.

Par exemple, au moins 10 pièges par hectare, de préférence au moins 15 pièges par hectare, plus préférentiellement au moins 20 pièges par hectare sont utilisés à l'étape (I), (II) et/ou (III).

Les pièges sont de préférence installés avant la floraison, donc avant l'arrivée des bruches. Les pièges sont de préférence retirés avant la récolte.

Dans un mode de réalisation préféré, seule la ou les compositions présente(s) dans chaque piège changent lors de la mise en oeuvre des différentes étapes du procédé.

Dans le cadre de la présente demande, le terme « comprenant » doit être interprété comme couvrant toutes les caractéristiques spécifiquement mentionnées, ainsi qu'éventuellement certaines non-spécifiées additionnelles. Par ailleurs, l'utilisation du terme « comprenant » décrit également le monde de réalisation dans lequel aucune caractéristique autre que celles spécifiques mentionnées n'est présente (*i.e*. « consistant en »).

La présente invention sera illustrée plus en détail par les figures et exemples ci-dessous.

### Brève description des figures

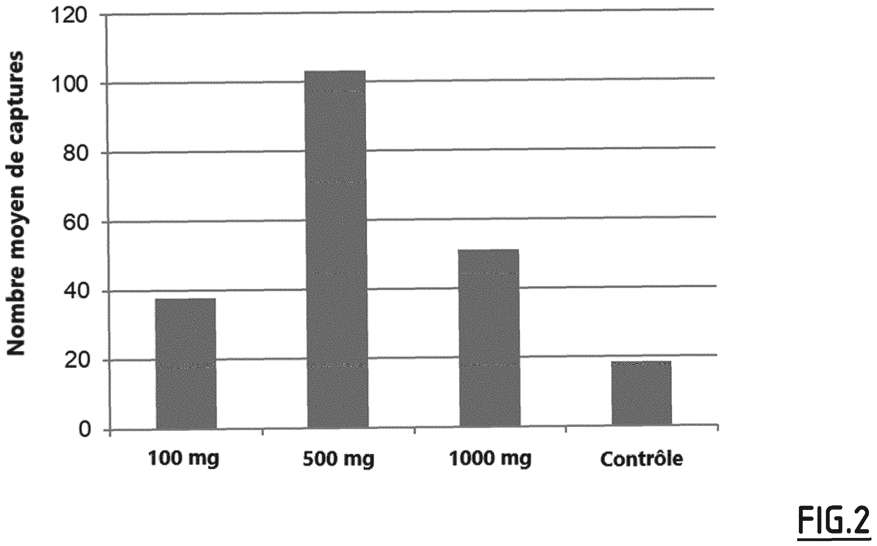

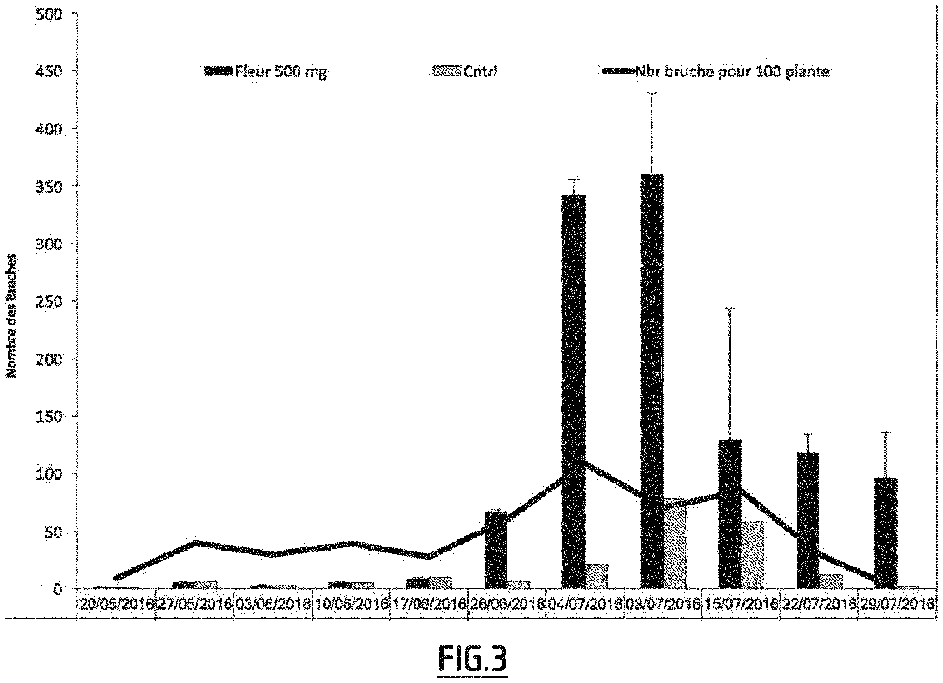

**La** **Figure 1** présente un exemple de piège vertical.
**La** **Figure 2** montre la dose dépendance des captures des bruches de la féverole.
**La** **Figure 3** montre les captures des bruches avec la composition selon l'invention entre le 20 mai 2016 et le 29 juillet 2016.

### Exemples

### Exemple 1 : Préparation du piège

Les plaquettes engluées sont placées dans une parcelle de culture de féverole. Ces plaquettes, en matière plastique Rhodoid^{®} (de taille 13,5 x 21 cm), sont perforées sur les bords et enfilées sur des piquets de bois (60 cm de hauteur). L'ensemble est enduit de glu sans odeur. Les diffuseurs (qui sont des flacons en verre de 2 ml pour passeur automatique (Restek, France) sont attachés par une ficelle en nylon devant la plaquette comme décrit plus haut et dans la Figure 1.

### Exemple 2 : Préparation d'une composition attractive

Plusieurs formulations avec les odeurs de fleur ont été testées dans les conditions du champ. Les formulations comprennent différents mélanges des composés actifs à différentes doses, en solution dans de l'huile de paraffine. Chaque formulation est contenue dans un flacon de 2 ml (Restek, France).

Les composés actifs ainsi que l'huile de paraffine sont tous disponibles dans le commerce, par exemple chez Sigma Aldrich, les composés actifs utilisés présentant les puretés suivantes:
- linalool 97%
- estragol ≥ 98%
- caryophyllène ≥ 80%
- limonène 97%
- cis-3-hexenyl acétate ≥ 98%
- ocimène : mélange d'isomères avec une pureté ≥ 90%
- benzaldéhyde ≥ 98%
- benzylalcool ≥ 99,5%

Une solution de chaque composé actif (linalool, estragol, caryophyllène, limonène, cis-3-hexenyl acétate, ocimène, benzaldéhyde, benzylalcool) a été préparée à 3 concentrations différentes dans l'huile de paraffine comme indiqué dans le tableau ci-dessous.

**[Tableau 1]**

| | **Dose 100 µg/µl** | **Dose 500 µg/µl** |
|---|---|---|
| Composé actif pur pesé sur la balance | 1000 mg | 5000 mg |
| Volume d'huile de paraffine utilisé pour la dilution | 10 ml | 10 ml |

Pour préparer une composition attractive, par exemple à la dose de 100 µg/µl, les inventeurs ont pesé 1000 mg du composé actif linalool et ajouté 10 ml d'huile de paraffine. La même procédure a été appliquée pour chacun des composés actifs estragol, caryophyllène, limonène, cis-3-hexenyl acétate, ocimène, benzaldéhyde, benzylalcool.

Ensuite, les inventeurs ont prélevé 170-210 µl de la solution de linalool à 100 µg/µl, 20-60 µl de la solution d'estragol à 100 µg/µl, 170-210 µl de la solution de caryophyllène à 100 µg/µl, 100-140 µl de la solution de limonène à 100 µg/µl, 240-280 µl de la solution de cis-3-hexenyl acétate à 100 µg/µl, 100-140 µl de la solution d'ocimène à 100 µg/µl, 30-70 µl de la solution de benzaldéhyde à 100 µg/µl, 30-70 µl de la solution de benzylalcool à 100 µg/µl. Les inventeurs ont alors obtenu un mélange de composés actifs dont le volume total était toujours de 1000 µl (1 ml).

Ce mélange a ensuite été placé dans un flacon de 2 ml.

Une composition typiquement utilisée avait la composition suivante :
- linalool : 18,5%
- estragol : 4,3%
- caryophyllène : 18,5%
- limonène : 11,8%
- cis-3-hexenyl acétate : 25,9%
- ocimène : 11,9%
- benzaldéhyde : 4,55%
- benzylalcool : 4,55%

### Exemple 3 : Résultats des captures

La composition attractive de l'exemple 2 (« Fleur ») a été testée à 3 doses dans des champs de féveroles, en utilisant les pièges décrits dans l'exemple 1. Ces tests ont été effectués à Villiers le Bâcle (France) entre le 20 mai 2016 et le 22 juillet 2016 dans des champs où les féveroles étaient en fleur.

Les résultats obtenus sont présentés sur les Figures 2 et 3.

La Figure 2 représente des nombres moyens de captures de Bruchus aux 3 doses de composition attractive. Les captures ont été relevées sur 3 pièges par périodes successives de 7 jours. Le nombre moyen de captures a été calculé sur 11 périodes. Les doses testées étaient de 100 mg, 500 mg ou 1000 mg de composition. Le contrôle correspond à un piège sans composition attractive.

La Figure 3 représente l'évolution dans le temps des nombres de captures sur la période pour la dose 500 mg, en comparaison avec le contrôle sans attractif. Le nombre de bruches pour 100 plantes a été estimé par une méthode visuelle indépendante.

Les résultats sont également présentés dans le tableau 2 ci-dessous.

**[Tableau 2]**

| | | **Fleur moyenne (Nombre de captures sur 3 pièges par période)** | | | |
|---|---|---|---|---|---|
| Date du relevé | Nb de bruches pour 100 plantes | **Fleur 100 mg** | **Fleur 500 mg** | **Fleur 1000 mg** | **Contrôle** |
| 20/05/16 | 9 | 2 | 2 | 6 | 0 |
| 27/05/16 | 40 | 4 | 6 | 4 | 6 |
| 03/06/16 | 30 | 3 | 3 | 1 | 3 |
| 10/06/16 | 39 | 5 | 5 | 2 | 5 |
| 17/06/16 | 28 | 5 | 9 | 7 | 10 |
| 26/06/16 | 60 | 18 | 67 | 23 | 6 |
| 04/07/16 | 109 | 88 | 342 | 90 | 21 |
| 08/07/16 | 70 | 106 | 360 | 197 | 78 |
| 15/07/16 | 85 | 89 | 129 | 145 | 58 |
| 22/07/16 | 30 | 43 | 118 | 50 | 12 |
| 29/07/16 | 0 | 52 | 96 | 36 | 2 |
| *moyenne* | | 38 | 103 | 51 | 18 |
| *écart type* | | 40 | 132 | 66 | |

Pendant l'activité spécifique de colonisation de la parcelle, la composition attractive a attiré jusqu'à environ 350 bruches engluées sur les pièges.

### Exemple 4 : Captures avec une méthode combinant deux attractifs

Un essai au champ a été réalisé sur 4 sites (A, B, C et D) en France entre les mois de mai et juillet, en distinguant 2 périodes : lors d'une première période de 3 semaines, les pièges disposés en parcelle étaient pour moitié avec la composition selon l'exemple 2 (« attractif 1, dit « fleurs ») et pour moitié avec une composition comprenant l'acétate de (3Z)-hex-3-èn-1-yle (« attractif 2, dit « gousses ») ; lors des 3 semaines suivantes, tous les pièges disposés en parcelles étaient avec la composition attractif 2, dit « gousse ». Chaque site comprenait entre 2 et 7 parcelles traitées et entre 5 et 16 parcelles témoins non traitées, 20 pièges par hectare ont été disposés dans les parcelles traitées.

Le taux de bruchage des grains de fèverole à la récolte a été estimé par échantillonnage de 250 grains prélevés sur la récolte dans chaque parcelle.

Le tableau 3 montre que la méthode de piégeage utilisée permet de réduire le taux de bruchage dans tous les sites évalués.

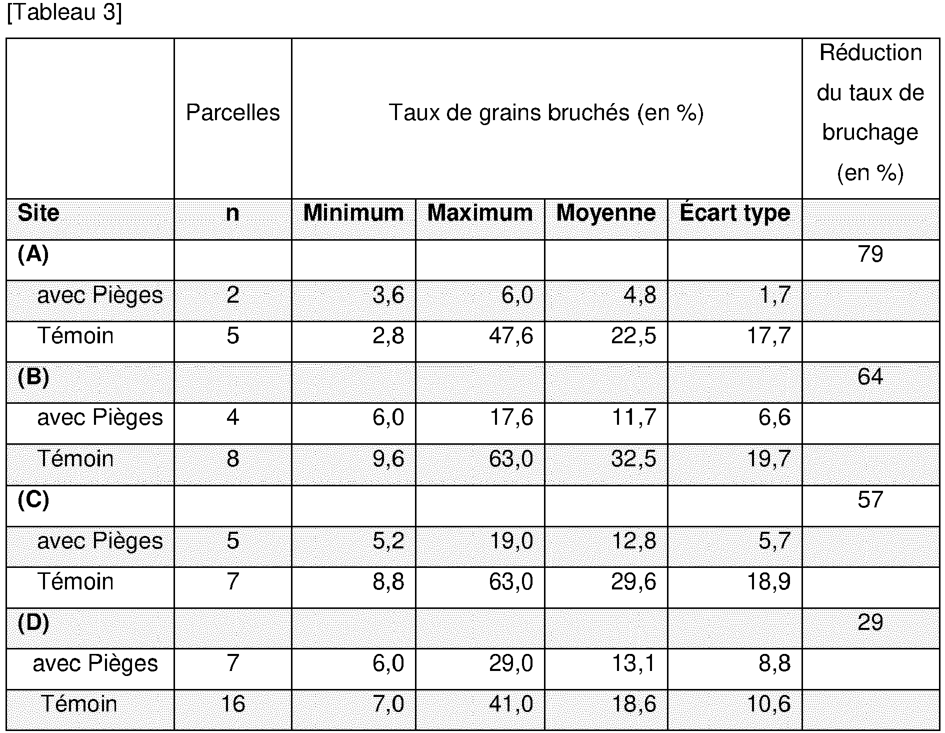

Ces essais sur 4 sites démontrent que le piégeage des bruches en combinant deux attractifs (« *Fleur » et « Gousse* ») sur l'ensemble de la période d'activité des bruches a un impact favorable sur la qualité de la récolte, puisque cette méthode a permis de réduire le taux des grains bruchés entre 29% et 79% par rapport aux parcelles témoins non traitées.

## Revendications

1. Composition attractive pour un insecte ravageur de la féverole du genre *Bruchus,* en particulier *Bruchus rufimanus,* comprenant
(a) 15,0% à 25,0% en poids de linalool,
(b) 1,0% à 10,0% en poids d'estragol,
(c) 15,0% à 25,0% en poids de caryophyllène,
(d) 5,0% à 20,0% en poids de limonène,
(e) 20,0% à 30,0% en poids de cis-3-hexenyl acétate,
(f) 5,0% à 20,0% en poids d'ocimène,
(g) 1,0% à 10,0% en poids de benzaldéhyde, et
(h) 1,0% à 10,0% en poids de benzylalcool,
par rapport au poids total du mélange constitué par (a), (b), (c), (d), (e), (f), (g) et (h).

2. Composition selon la revendication 1, comprenant
(a) 17,0% à 21,0% en poids de linalool,
(b) 2,0% à 6,0% en poids d'estragol,
(c) 17,0% à 21,0% en poids de caryophyllène,
(d) 10,0% à 14,0% en poids de limonène,
(e) 24,0% à 28,0% en poids de cis-3-hexenyl acétate,
(f) 10,0% à 14,0% en poids d'ocimène,
(g) 3,0% à 7,0% en poids de benzaldéhyde, et
(h) 3,0% à 7,0% en poids de benzylalcool,
par rapport au poids total du mélange constitué par (a), (b), (c), (d), (e), (f), (g) et (h).

3. Composition selon la revendication 1 ou 2, la composition ne comprenant pas d'autres agents actifs que les composés (a) à (h).

4. Utilisation de la composition selon l'une quelconque des revendications 1 à 3, pour attirer et/ou piéger un insecte ravageur de la féverole du genre Bruchus, en particulier *Bruchus rufimanus.*

5. Utilisation selon la revendication 4, dans laquelle l'insecte ravageur de la féverole est un mâle ou une femelle.

6. Kit pour le piégeage d'un insecte ravageur de la féverole du genre Bruchus, en particulier *Bruchus rufimanus* comprenant :
i. une composition selon l'une quelconque des revendications 1 à 3, et
ii. au moins un piège pour insecte, ledit piège étant de préférence un piège vertical comprenant une feuille de matière plastique à base d'acétate de cellulose transparente et engluée.

7. Kit selon la revendication 6, comprenant en outre (iii) une composition comprenant de l'acétate de (3Z)-hex-3-èn-1-yle.

8. Kit selon la revendication 7, dans lequel la composition (iii) comprend :
(A) au moins 30,0%, de préférence de 30,0% à 40,0%, en poids d'acétate de (3Z)-hex-3-èn-1-yle,
(B) de 15,0% à 20,0% en poids d'ocimène,
(C) de 10,0% à 20,0% en poids de linalool,
(D) de 10,0% à 20,0% en poids de caryophyllène, et
(E) de 15,0% à 20,0% en poids de limonène,
par rapport au poids total du mélange constitué par (A), (B), (C), (D) et (E).

9. Utilisation du kit selon l'une quelconque des revendications 6 à 8, pour le piégeage d'un insecte ravageur de la féverole du genre Bruchus, en particulier *Bruchus rufimanus.*

10. Méthode de piégeage d'insectes ravageurs de la féverole du genre Bruchus, en particulier *Bruchus rufimanus,* comprenant les étapes successives suivantes :
(i) l'attraction et/ou le piégeage d'insectes ravageurs de la féverole du genre Bruchus, en particulier *Bruchus rufimanus,* en utilisant au moins un piège pour insecte ravageur comprenant la composition selon l'une quelconque des revendications 1 à 3 et, optionnellement, au moins un piège pour insecte ravageur comprenant une composition comprenant de l'acétate de (3Z)-hex-3-èn-1-yle, et
(ii) l'attraction et/ou le piégeage d'insectes ravageurs de la féverole du genre Bruchus, en particulier *Bruchus rufimanus,* en utilisant au moins un piège pour insecte ravageur comprenant une composition comprenant de l'acétate de (3Z)-hex-3-èn-1-yle.

11. Méthode de piégeage selon la revendication 10, comprenant les étapes successives suivantes :
pre-(i) optionnellement, l'attraction et/ou le piégeage d'insectes ravageurs de la féverole du genre Bruchus, en particulier *Bruchus rufimanus,* en utilisant au moins un piège pour insecte ravageur comprenant la composition selon l'une quelconque des revendications 1 à 3,
(i) l'attraction et/ou le piégeage d'insectes ravageurs de la féverole du genre Bruchus, en particulier *Bruchus rufimanus,* en utilisant au moins un piège pour insecte ravageur comprenant la composition selon l'une quelconque des revendications 1 à 3 et au moins un piège pour insecte ravageur comprenant une composition comprenant de l'acétate de (3Z)-hex-3-èn-1-yle, et
(ii) l'attraction et/ou le piégeage d'insectes ravageurs de la féverole du genre Bruchus, en particulier *Bruchus rufimanus* en utilisant au moins un piège pour insecte ravageur comprenant une composition comprenant de l'acétate de (3Z)-hex-3-èn-1-yle.

## Patentansprüche

1. Lockstoffzusammensetzung für ein Ackerbohnenschädlingsinsekt der Gattung *Bruchus,* insbesondere *Bruchus rufimanus,* umfassend
(a) 15,0 Gew.-% bis 25,0 Gew.-% Linalool,
(b) 1,0 Gew.-% bis 10,0 Gew.-% Estragol,
(c) 15,0 Gew.-% bis 25,0 Gew.-% Caryophyllen,
(d) 5,0 Gew.-% bis 20,0 Gew.-% Limonen,
(e) 20,0 Gew.-% bis 30,0 Gew.-% cis-3-Hexenylacetat,
(f) 5,0 Gew.-% bis 20,0 Gew.-% Ocimen,
(g) 1,0 Gew.-% bis 10,0 Gew.-% Benzaldehyd und
(h) 1,0 Gew.-% bis 10,0 Gew.-% Benzylalkohol,
bezogen auf das Gesamtgewicht der Mischung, die aus (a), (b), (c), (d), (e), (f), (g) und (h) besteht.

2. Zusammensetzung nach Anspruch 1, umfassend
(a) 17,0 Gew.-% bis 21,0 Gew.-% Linalool,
(b) 2,0 Gew.-% bis 6,0 Gew.-% Estragol,
(c) 17,0 Gew.-% bis 21,0 Gew.-% Caryophyllen,
(d) 10,0 Gew.-% bis 14,0 Gew.-% Limonen,
(e) 24,0 Gew.-% bis 28,0 Gew.-% cis-3-Hexenylacetat,
(f) 10,0 Gew.-% bis 14,0 Gew.-% Ocimen,
(g) 3,0 Gew.-% bis 7,0 Gew.-% Benzaldehyd und
(h) 3,0 Gew.-% bis 7,0 Gew.-% Benzylalkohol,
bezogen auf das Gesamtgewicht der Mischung, die aus (a), (b), (c), (d), (e), (f), (g) und (h) besteht.

3. Zusammensetzung nach Anspruch 1 oder 2, wobei die Zusammensetzung keine anderen Wirkstoffe als die Verbindungen (a) bis (h) umfasst.

4. Verwendung der Zusammensetzung nach einem der Ansprüche 1 bis 3, um ein Ackerbohnenschädlingsinsekt der Gattung Bruchus, insbesondere *Bruchus rufimanus,* anzulocken und/oder zu fangen.

5. Verwendung nach Anspruch 4, wobei das Ackerbohnenschädlingsinsekt männlich oder weiblich ist.

6. Set für den Fang eines Ackerbohnenschädlingsinsekts der Gattung Bruchus, insbesondere *Bruchus rufimanus,* umfassend:
i. eine Zusammensetzung nach einem der Ansprüche 1 bis 3, und
ii. mindestens eine Insektenfalle, wobei die Falle vorzugsweise eine vertikale Falle ist, die eine transparente, mit Klebstoff versehene Kunststofffolie auf Celluloseacetatbasis umfasst.

7. Kit nach Anspruch 6, ferner umfassend (iii) eine Zusammensetzung, die (3Z)-Hex-3-en-1-yl-acetat umfasst.

8. Kit nach Anspruch 7, wobei die Zusammensetzung (iii) umfasst:
(A) mindestens 30,0 Gew.-%, vorzugsweise 30,0 Gew.-% bis 40,0 Gew.-%, (3Z)-Hex-3-en-1-yl-acetat,
(B) 15,0 Gew.-% bis 20,0 Gew.-% Ocimen,
(C) 10,0 Gew.-% bis 20,0 Gew.-% Linalool,
(D) 10,0 Gew.-% bis 20,0 Gew.-% Caryophyllen und
(E) 15,0 Gew.-% bis 20,0 Gew.-% Limonen,
bezogen auf das Gesamtgewicht der Mischung, die aus (A), (B), (C), (D) und (E) besteht.

9. Verwendung des Kits nach einem der Ansprüche 6 bis 8 zum Fangen eines Ackerbohnenschädlingsinsekts der Gattung Bruchus, insbesondere *Bruchus rufimanus.*

10. Verfahren zum Fangen von Ackerbohnenschädlingsinsekten der Gattung Bruchus, insbesondere *Bruchus rufimanus,* das die folgenden aufeinanderfolgenden Schritte umfasst:
(i) Anlocken und/oder Fangen von Ackerbohnenschädlingsinsekten der Gattung Bruchus, insbesondere *Bruchus rufimanus,* unter Verwendung von mindestens einer Schädlingsinsektenfalle, die die Zusammensetzung nach einem der Ansprüche 1 bis 3 umfasst, und optional mindestens einer Schädlingsinsektenfalle, die eine Zusammensetzung umfasst, die (3Z)-Hex-3-en-1-yl-acetat umfasst, und
(ii) Anlocken und/oder Fangen von Ackerbohnenschädlingsinsekten der Gattung Bruchus, insbesondere *Bruchus rufimanus,* unter Verwendung von mindestens einer Schädlingsinsektenfalle, die eine Zusammensetzung umfasst, die (3Z)-Hex-3-en-1-yl-acetat umfasst.

11. Fangverfahren nach Anspruch 10, das die folgenden aufeinanderfolgenden Schritte umfasst:
pre-(i) optional Anlocken und/oder Fangen von Ackerbohnenschädlingsinsekten der Gattung Bruchus, insbesondere *Bruchus rufimanus,* unter Verwendung von mindestens einer Schädlingsinsektenfalle, die die Zusammensetzung nach einem der Ansprüche 1 bis 3 umfasst,
(i) Anlocken und/oder Fangen von Ackerbohnenschädlingsinsekten der Gattung Bruchus, insbesondere *Bruchus rufimanus,* unter Verwendung von mindestens einer Schädlingsinsektenfalle, die die Zusammensetzung nach einem der Ansprüche 1 bis 3 umfasst und mindestens einer Schädlingsinsektenfalle, die eine Zusammensetzung umfasst, die (3Z)-Hex-3-en-1-yl-acetat umfasst, und
(ii) Anlocken und/oder Fangen von Ackerbohnenschädlingsinsekten der Gattung Bruchus, insbesondere *Bruchus rufimanus,* unter Verwendung von mindestens einer Schädlingsinsektenfalle, die eine Zusammensetzung umfasst, die (3Z)-Hex-3-en-1-yl-acetat umfasst.

## Claims

1. Composition attractive to an insect pest of faba bean of the genus *Bruchus,* in particular *Bruchus rufimanus,* comprising
(a) 15.0% to 25.0% by weight of linalool,
(b) 1.0% to 10.0% by weight of estragol,
(c) 15.0% to 25.0% by weight of caryophyllene,
(d) 5.0% to 20.0% by weight of limonene,
(e) 20.0% to 30.0% by weight of cis-3-hexenyl acetate,
(f) 5.0% to 20.0% by weight of ocimene,
(g) 1.0% to 10.0% by weight of benzaldehyde, and
(h) 1.0% to 10.0% by weight of benzyl alcohol,
based on the total weight of the mixture made up of (a), (b), (c), (d), (e), (f), (g) and (h).

2. The lubricant composition according to claim 1, comprising:
(a) 17.0% to 21.0% by weight of linalool,
(b) 2.0% to 6.0% by weight of estragol,
(c) 17.0% to 21.0% by weight of caryophyllene,
(d) 10.0% to 14.0% by weight of limonene,
(e) 24.0% to 28.0% by weight of cis-3-hexenyl acetate,
(f) 10.0% to 14.0% by weight of ocimene,
(g) 3.0% to 7.0% by weight of benzaldehyde, and
(h) 3.0% to 7.0% by weight of benzyl alcohol,
based on the total weight of the mixture made up of (a), (b), (c), (d), (e), (f), (g) and (h).

3. Composition according to claim 1 or 2, the composition not comprising any active agents other than compounds (a) to (h).

4. Use of the composition according to any one of claims 1 to 3, for attracting and/or trapping an insect pest of faba beans of the genus Bruchus, in particular *Bruchus rufimanus.*

5. Use according to claim 4, wherein the insect pest of the faba bean is a male or a female.

6. Kit for trapping a bean insect pest of the genus Bruchus, in particular *Bruchus rufimanus,* comprising:
i. a composition according to any one of claims 1 to 3, and
ii. at least one insect trap, the said trap preferably being a vertical trap comprising a sheet of transparent and glued cellulose acetate-based plastic material.

7. A kit according to claim 6, further comprising (iii) a composition comprising (3Z)-hex-3-en-1-yl acetate.

8. A kit according to claim 7, wherein the composition (iii) comprises:
(A) at least 30.0%, preferably from 30.0% to 40.0%, by weight of (3Z)-hex-3-en-1-yl acetate,
(B) from 15.0% to 20.0% by weight of ocimene,
(C) from 10.0% to 20.0% by weight of linalool,
(D) from 10.0% to 20.0% by weight of caryophyllene, and
(E) from 15.0% to 20.0% by weight of limonene,
based on the total weight of the mixture made up of (A), (B), (C), (D) and (E).

9. Use of the kit according to any one of claims 6 to 8, for trapping an insect pest of faba beans of the genus Bruchus, in particular *Bruchus rufimanus.*

10. A method of trapping insect pests of faba beans of the genus Bruchus, in particular *Bruchus rufimanus,* comprising the following successive steps:
(i) attracting and/or trapping insect pests of faba bean of the genus Bruchus, in particular *Bruchus rufimanus,* using at least one insect pest trap comprising the composition according to any one of claims 1 to 3 and, optionally, at least one insect pest trap comprising a composition comprising (3Z)-hex-3-en-1-yl acetate, and
(ii) attracting and/or trapping faba bean insect pests of the genus Bruchus, in particular *Bruchus rufimanus,* using at least one insect pest trap comprising a composition comprising (3Z)-hex-3-en-1-yl acetate.

11. A trapping method according to claim 10, comprising the following successive steps:
pre-(i) optionally, attracting and/or trapping insect pests of faba bean of the genus Bruchus, in particular *Bruchus rufimanus,* using at least one insect pest trap comprising the composition according to any one of claims 1 to 3,
(i) attracting and/or trapping insect pests of faba bean of the genus Bruchus, in particular *Bruchus rufimanus,* using at least one insect pest trap comprising the composition according to any one of claims 1 to 3 and at least one insect pest trap comprising a composition comprising (3Z)-hex-3-en-1-yl acetate, and
(ii) attracting and/or trapping bean insect pests of the genus Bruchus, in particular *Bruchus rufimanus* using at least one insect pest trap comprising a composition comprising (3Z)-hex-3-en-1-yl acetate.
